# FASCICULE DE BREVET EUROPEEN

(11) **EP 0 505 265 B1**
(45) Date de publication et mention de la délivrance du brevet: **20.11.1996**
(21) Numéro de dépôt: 92400709.9
(22) Date de dépôt: 17.03.1992
(51) Int. Cl.: G01F 23/32, G01F 23/36

(54) **Dispositif perfectionné pour la mesure de niveau de carburant dans un réservoir de véhicule automobile**
Verbesserte Vorrichtung zur Kraftstoffsfüllstandmessung in einem Fahrzeugstank
Improved apparatus for fuel level measurement in a vehicle tank

(30) Priorité: 19.03.1991 FR 9103313
(43) Date de publication de la demande: 23.09.1992
(73) Titulaire: JAEGER, F-92303 Levallois-Perret (FR)
(72) Inventeur: Baux, Christian, F-92300 Levallois-Perret (FR); Bach, Simon, Warwickshire CV33 9UB (GB); Salaun, Thierry, F-95560 Montsoult (FR)
(74) Mandataire: Martin, Jean-Jacques

(56) Documents cités:
- EP-A- 0 403 391
- FR-A- 628 151
- GB-A- 2 004 064
- US-A- 2 325 582
- US-A- 3 449 955
- US-A- 3 925 747

## Description

La présente invention concerne un dispositif de mesure de niveau de carburant dans un réservoir de véhicule automobile.

Elle concerne plus précisément les dispositifs de jaugeage de carburant du type comprenant :
- un flotteur apte à suivre le niveau de carburant,
- un levier articulé sur un support et qui porte le flotteur, et
- un transducteur électrique piloté par le levier de sorte que ce transducteur fournisse un signal représentatif du niveau de carburant dans le réservoir.

Le document FR-A-628151 décrit un dispositif de mesure de niveau de carburant dans un réservoir de véhicule automobile conforme au préambule de la revendication 1 annexée et comprenant notamment :
- un flotteur apte à suivre le niveau de carburant,
- un levier qui porte le flotteur et
- un transducteur électrique piloté par le levier de sorte que le transducteur fournisse un signal représentatif du niveau de carburant dans le réservoir.

On sait depuis de nombreuses années, que les réservoirs de carburant sont susceptibles de déformation. Cela est vrai tout particulièrement lorsque les réservoirs sont réalisés en matière plastique. Par exemple, la profondeur du réservoir peut varier sensiblement en fonction de différents paramètres tels que la température, le poids de carburant dans le réservoir, etc ...

Si des précautions ne sont pas prises, les déformations du réservoir conduisent à un jaugeage erroné, au moins lors du jaugeage de faible quantité de carburant dans le fond du réservoir.

Les erreurs peuvent avoir des conséquences graves lorsque l'information issue du transducteur électrique est utilisée pour générer une information d'alerte indiquant au conducteur qu'il atteint un niveau minimal dit généralement "de réserve". En effet l'erreur précitée peut conduire à retarder la génération de l'alerte. En d'autres termes, le dispositif peut afficher une quantité de carburant supérieure à celle contenue réellement dans le réservoir.

On a déjà tenté de résoudre le problème ainsi posé à l'aide de dispositifs dits "à indexation sur le fond du réservoir".

De tels dispositifs sont décrits par exemple dans les documents US-A-4184370, DE-A-3310704, US-A-3925747, GB-A-2004064, EP-A-403 391 et US-A-3449955.

Tous ces dispositifs connus dits à indexation sur le fond comprennent des moyens aptes à solliciter contre le fond du réservoir l'ensemble de jaugeage comprenant le support de levier porte flotteur et le support de transducteur électrique.

Le document EP-A-403391 décrit un dispositif de mesure de niveau de carburant dans un réservoir de véhicule automobile comprenant un flotteur apte à suivre le niveau de carburant, un levier articulé sur un support et portant le flotteur et un transducteur électrique piloté par le levier de sorte que le transducteur fournisse un signal représentatif du niveau de carburant dans le réservoir. Dans ce dispositif, le transducteur électrique est placé dans un boîtier lié au support et le support est sollicité en permanence contre la paroi inférieure du réservoir pour suivre les déplacements de celle-ci.

Ces solutions connues conduisent à des structures complexes.

Le but de la présente invention est de perfectionner les systèmes existants.

Ce but est atteint selon la présente invention grâce à un dispositif de jaugeage défini en revendication 1.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue schématique en coupe verticale d'un réservoir comprenant un dispositif de jaugeage conforme à la présente invention,
- la figure 2 représente une vue partielle, en plan et de dessus, du même dispositif de jaugeage,
- la figure 3 représente une vue schématique en coupe verticale d'un réservoir équipé d'un dispositif de jaugeage conforme à une première variante de réalisation de la présente invention,
- la figure 4 représente une vue schématique en coupe partielle, selon le plan de coupe référencé IV-IV sur la figure 3, de moyens d'entraînement incorporés à cette variante de réalisation, et
- la figure 5 représente une autre vue schématique en coupe verticale d'un réservoir équipé d'un dispositif de jaugeage conforme à une seconde variante de réalisation de la présente invention.

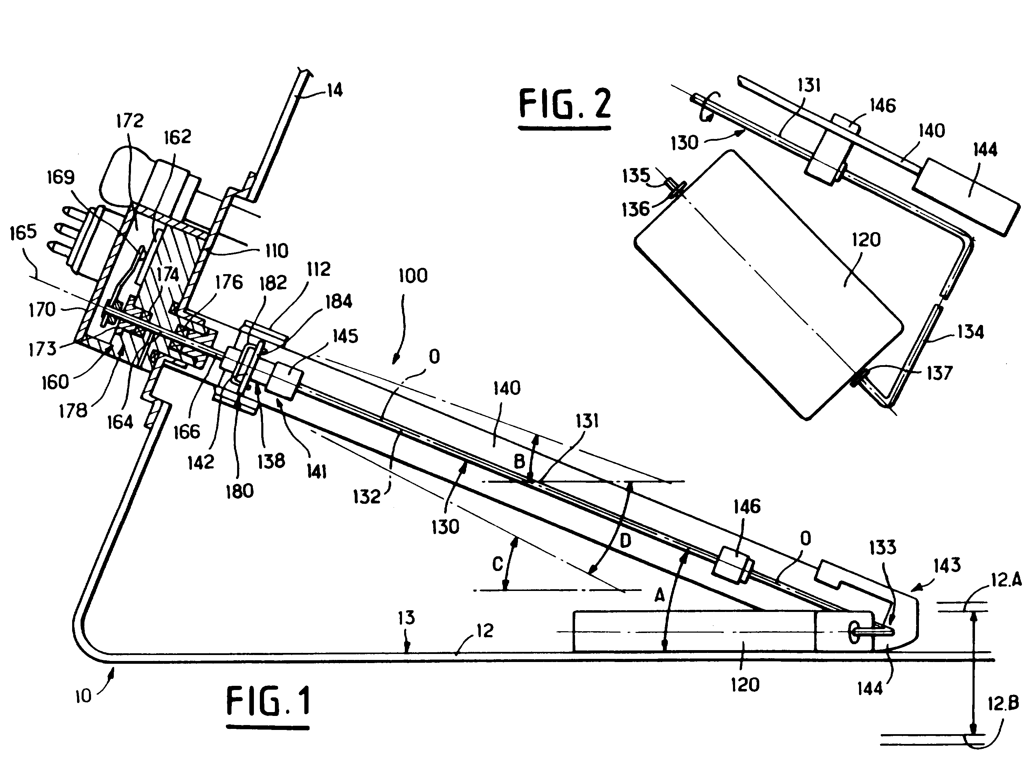

On va tout d'abord décrire le premier mode de réalisation préférentiel représenté sur les figures 1 et 2 annexées.

Sur les figures 1 et 2, le réservoir représenté partiellement porte la référence générale 10, tandis que le dispositif de jaugeage porte la référence générale 100.

Plus précisément, on aperçoit sur la figure 1, une paroi de fond 12 généralement horizontale, du réservoir 10, et une paroi latérale 14 de celui-ci. Selon la figure 1, la paroi latérale 14 est inclinée sur la verticale. En variante, cette paroi 14 pourrait cependant être verticale, c'est-à-dire orthogonale à la paroi de fond 12.

Selon le mode de réalisation représenté sur les figures 1 et 2, le dispositif de jaugeage 100 est supporté par la paroi latérale 14.

Plus précisément, le dispositif de jaugeage 100 est fixé sur une embase 110 elle-même fixée sur la paroi latérale 14.

Le dispositif de jaugeage 100 représenté sur les figures 1 et 2 comprend essentiellement un flotteur 120, un levier support de flotteur 130, un élément support 140 portant le levier 130 et un transducteur électrique 160.

L'élément support 140 est un élément rigide allongé. De préférence, l'élément support 140 est formé d'une lame rectiligne et plane.

L'élément 140 est articulé, à son extrémité supérieure 141, autour d'un axe horizontal 142, sur l'embase 110.

Plus précisément, l'élément support 140 est articulé autour de l'axe 142 sur une patte 112 ou tout moyen équivalent venu de l'embase 110.

La patte 112 fait saillie vers l'intérieur du réservoir 10, à partir de l'embase 110.

L'extrémité inférieure 143 de l'élément support 140 (c'est-à-dire l'extrémité opposée à l'axe 142) est munie d'un patin 144 qui repose en permanence sur la surface supérieure 13 de la paroi de fond 12 du réservoir.

L'extrémité inférieure 143 de l'élément support 140 peut être sollicitée contre le fond 12 du réservoir par simple gravité, ou le cas échéant, par un élément ressort intercalé entre la patte 112 et l'élément support 140.

Ainsi selon le mode de réalisation représenté sur la figure 1 annexée, l'axe longitudinal O-O de l'élément support 140 est incliné sur l'horizontal d'un angle moyen A de l'ordre de 25°.

On a ébauché sur la droite de la figure 1, deux positions 12.A, 12.B, respectivement surélevée et abaissée susceptibles d'être occupées par la paroi de fond 12 en cas de déformation du réservoir. L'homme de l'art comprendra aisément que le patin 144 prévu à l'extrémité inférieure 143 de l'élément support 140 suit le fond 12 du réservoir selon les dispositions précédemment décrites. Pour cela, l'élément support 140 pivote autour de l'axe 142 sur la patte 112.

De ce fait, lorsque le fond 12 du réservoir occupe la position surélevée 12.A, l'axe longitudinal O-O de l'élément support 140 fait par rapport à l'horizontal un angle B inférieur à l'angle A précité. En revanche, lorsque le fond 12 du réservoir occupe la position abaissée 12.B, l'axe longitudinal O-O de l'élément 140 fait par rapport à l'horizontal un angle C supérieur à l'angle A précité.

Le débattement de l'axe longitudinal O-O de l'élément support 140, entre la position élevée et la position abaissée, est référencé D sur la figure 1.

Le levier 130 est monté à pivotement sur l'élément support 140.

Plus précisément, le levier 130 comprend un brin principal 131. Ce brin 131 est rectiligne. Il s'étend parallèlement à l'axe longitudinal O-O de l'élément support 140. Le brin principal 131 est monté sur l'élément support 140 pour pivoter autour de son axe longitudinal 132 lui-même parallèle à l'axe longitudinal O-O de l'élément support 140. L'axe 132 du levier 130 est perpendiculaire à l'axe 142 de l'élément support 140.

Le brin principal 131 du levier 130 peut être supporté sur l'élément 140 par tout moyen classique approprié. Selon le mode de réalisation particulier représenté sur les figures annexées, le brin principal 131 du levier 130 est monté à pivotement sur l'élément support 140 grâce à deux paliers 145, 146, prévus respectivement au voisinage de l'extrémité supérieure 141 de l'élément support 140 et de l'extrémité inférieure 143 de celui-ci.

L'extrémité inférieure 133 du brin principal 131 est coudée au moins dans une première direction pour porter le flotteur 120. Plus précisément, selon le mode de réalisation préférentiel représenté sur les figures 1 et 2, le brin principal 131 se prolonge, à son extrémité inférieure 133, par un double coude formé d'un brin intermédiaire 134 et d'un brin extrême porte flotteur 135.

Le brin intermédiaire 134 est coudé sensiblement perpendiculairement par rapport au brin principal 131. Le brin extrême porte flotteur 135 est coudé d'environ 70° par rapport au brin intermédiaire 134, et vu dans une projection verticale, d'environ 25° par rapport à l'axe longitudinal 132 du brin principal 131. Le brin extrême 135 converge vers le brin principal 131 en direction de son extrémité libre.

Bien entendu, le levier 130 peut faire l'objet de nombreuses variantes de réalisation en fonction de la géométrie du réservoir 10 et de la courbe de jaugeage recherchée.

Le flotteur 120 peut faire l'objet de nombreuses variantes de réalisation. Selon le mode de réalisation particulier représenté sur les figures 1 et 2, le brin extrême support de flotteur 135 traverse le flotteur 120, de sorte que le flotteur 120 soit libre de rotation sur ce brin 135. Le flotteur 120 est centré sur le brin 135.

Le flotteur 120 est immobilisé à translation sur le brin extrême support 135 par tout moyen classique approprié, tel que par exemple par des rondelles 136, 137 placées sur le brin 135 de part et d'autre du flotteur 120 et associées à des poinçonnages ménagés sur celui-ci.

L'homme de l'art comprendra aisément que lorsque le niveau de liquide s'élève ou s'abaisse dans le réservoir 10, le flotteur 120 suit le niveau de liquide et par conséquent, le flotteur 120 étant excentré par rapport à l'axe longitudinal 132 du levier 130, ce dernier tourne autour de son axe longitudinal 132 dans les paliers 145, 146.

Le transducteur électrique 160 peut faire l'objet de nombreuses variantes de réalisation.

Toutefois de préférence, il s'agit d'un transducteur résistif.

Plus précisément, le transducteur électrique 160 comprend un élément résistif associé à un curseur. On peut prévoir un curseur fixe sur l'embase 110 et une piste résistive liée à entraînement au levier 130.

Toutefois, de préférence comme représenté sur la figure 1, le transducteur électrique 160 comprend une piste résistive 162 fixée sur l'embase 110 et un curseur électriquement conducteur 163 mobile sur la piste résistive 162 et porté à cette fin par un arbre 164 conçu pour être entraîné par le levier 130.

Plus précisément encore, la piste résistive 162 est formée de préférence d'une piste résistive en forme de secteur de couronne centré sur l'axe 165 de l'arbre 164. Cet axe 165 s'étend perpendiculairement à la paroi latérale 14 portant l'embase 110. La piste résistive 163 est placée dans un boîtier 170 solidaire de l'embase 110. Le curseur 163 qui repose sur la piste 162 est prévu à l'une des extrémités de l'arbre 164. Le curseur 163 s'étend dans une direction générale perpendiculaire à l'axe 165 de l'arbre 164. La piste résistive 162 et le curseur associé 163 sont placés dans une première chambre étanche 172 du boîtier 170. L'arbre 164 traverse une paroi 173 de cette chambre 172. A ce niveau l'étanchéité est assurée par un premier joint annulaire 174 engagé sur l'arbre 164 et porté par la paroi 173. L'arbre 164 traverse ensuite l'embase 110 au niveau d'un second joint annulaire 176 placé sur l'arbre 164 et porté par l'embase 110. Ainsi, l'extrémité 166 de l'arbre 164, qui est opposée au curseur 163 est placée dans le réservoir 10 et peut coopérer avec le levier 130 pour déplacer le curseur 163 sur la piste résistive 162.

La chambre intermédiaire 178 formée entre les joints 174 et 176 communique de préférence avec l'atmosphère. Les dispositions qui précèdent (chambre étanche logeant la piste résistive 162 et le curseur 163 associé et chambre intermédiaire 178 liée à l'atmosphère avec double joints d'étanchéité 174, 176 sur l'arbre 164 entraînant le curseur 163), autorise une isolation parfaite de la piste résistive 162 par rapport au carburant et aux vapeurs de celui-ci contenues dans le réservoir 10. La piste résistive 162 est ainsi totalement protégée des vapeurs du carburant et donc insensible à celles-ci.

Il est prévu entre l'extrémité 166 de l'arbre 164, qui est placée à l'intérieur du réservoir 10 et l'extrémité supérieure 138 du levier 130, des moyens assurant une liaison à rotation entre le levier 130 porte flotteur et l'arbre porte curseur 164.

Par ailleurs, les moyens précités assurent une liaison à rotation entre le levier 130 porte flotteur et l'arbre porte curseur 164 avec possibilité de déplacement angulaire entre ceux-ci autour de l'axe 142.

De préférence, comme représenté sur la figure 1, les axes 165 et 132 sont coaxiaux dans la position moyenne du fond 12 du réservoir. Cette disposition n'est cependant pas impérative, en position moyenne les axes 165 et 132 peuvent être parallèles et non coaxiaux.

Ces moyens assurant une liaison à rotation avec possiblité de débattement angulaire relatif peuvent être formés de toute structure classique connue de l'homme de l'art.

A titre d'exemple non limitatif, on citera les moyens suivants : dispositif à tocs et doigts, dispositif à dents, dispositif à griffes, dispositif à doigts et clavettes, dispositif à bielles et bras, dispositif élastique par liens, dispositif à cardan, dispositif à flexible. Tous ces dispositifs d'entraînement destinés à transmettre le mouvement circulaire continu d'un arbre, le levier porte flotteur 130 en l'espèce, en un mouvement circulaire continu d'un autre arbre placé sensiblement dans son prolongement, l'arbre 164 support de curseur en l'espèce, sont bien connus de l'homme de l'art et ne seront donc pas décrits en détail par la suite. A titre de référence, on indiquera que ces moyens d'entraînement sont décrits par exemple dans l'ouvrage intitulé "Accouplements, joints de cardans et encliquetages" de J. Brondel, Edition Dunod, Paris 1961.

Selon le mode de réalisation particulier représenté sur la figure 1, les moyens d'entraînement 180 prévus entre l'extrémité 166 de l'arbre 164 interne au réservoir 10 et l'extrémité supérieure 138 du levier 131 sont du type à cardan.

Plus précisément encore, on distingue sur la figure 1, une structure 182 en forme de double fourche liée à l'extrémité 166 de l'arbre 164 et conçue pour recevoir un doigt d'entraînement 184 lié à l'extrémité 138 du levier 130. Les deux fourches de la structure 182 sont symétriques par rapport à l'axe 165 de l'arbre 164 et parallèles à celui-ci. Le doigt d'entraînement 184 quant à lui s'étend perpendiculairement à l'axe longitudinal 132 du levier 130.

Bien entendu, une structure inverse peut être retenue. C'est-à-dire que le doigt d'entraînement pourrait être lié à l'extrémité 166 de l'arbre 164, tandis que la structure en fourche complémentaire serait prévue à l'extrémité 138 du levier 130. La structure de type cardan 180 liant l'extrémité 166 de l'arbre 164 et l'extrémité 138 du levier 137 peut par ailleurs faire l'objet de toutes variantes de réalisation du type à cardan connues de l'homme de l'art.

Selon une caractéristique avantageuse de la présente invention, l'axe 142 d'articulation de l'élément support 140 sur l'embase 110 passe par l'axe du doigt d'entraînement 184 et coïncide avec le point de séquence entre les axes 165 et 132.

Grâce à cette disposition, le curseur 163 occupe toujours au moins sensiblement la même position d'origine lorsque le flotteur 120 repose contre le fond 12 du réservoir.

Le fonctionnement du dispositif de jaugeage représenté sur les figures 1 et 2 annexées, est pour l'essentiel le suivant.

Lorsque le niveau de carburant varie dans le réservoir 10, le flotteur 120 suit celui-ci. Par conséquent, les évolutions de niveau de carburant dans le réservoir 10 conduisent à un pivotement du levier 130 autour de son axe longitudinal 132. Ce mouvement de rotation du levier 130 est communiqué à l'arbre 164 grâce à la structure d'entraînement 180. Ainsi la position du curseur 163 sur la piste résistive 162 varie en fonction du niveau de liquide dans le réservoir 10. De façon connue en soi, l'information prélevée aux bornes de l'élément résistif 162 est donc directement représentative du niveau de liquide dans le réservoir.

Si le fond 12 du réservoir 10 se déforme comme représenté en 12.A ou 12.B sur la droite de la figure 1, le patin 144 de l'élément support 140 suit ces déformations. L'élément support 140 pivote par conséquent autour de l'axe 142. Toutefois, compte-tenu de la configuration des moyens 180 intercalés entre le levier 130 et l'arbre 164, ces déformations du fond 12 du réservoir n'influencent pas la position du curseur 163. En d'autres termes, quelle que soit la position du fond 12 du réservoir, à niveau de carburant égal dans le réservoir 10, le curseur 163 occupe toujours au moins sensiblement la même position par rapport à la piste résistive 162. Dans ces conditions, l'information délivrée par le transducteur électrique 160 reste la même, à niveau de carburant égal dans le réservoir, quelles que soient les déformations de celui-ci.

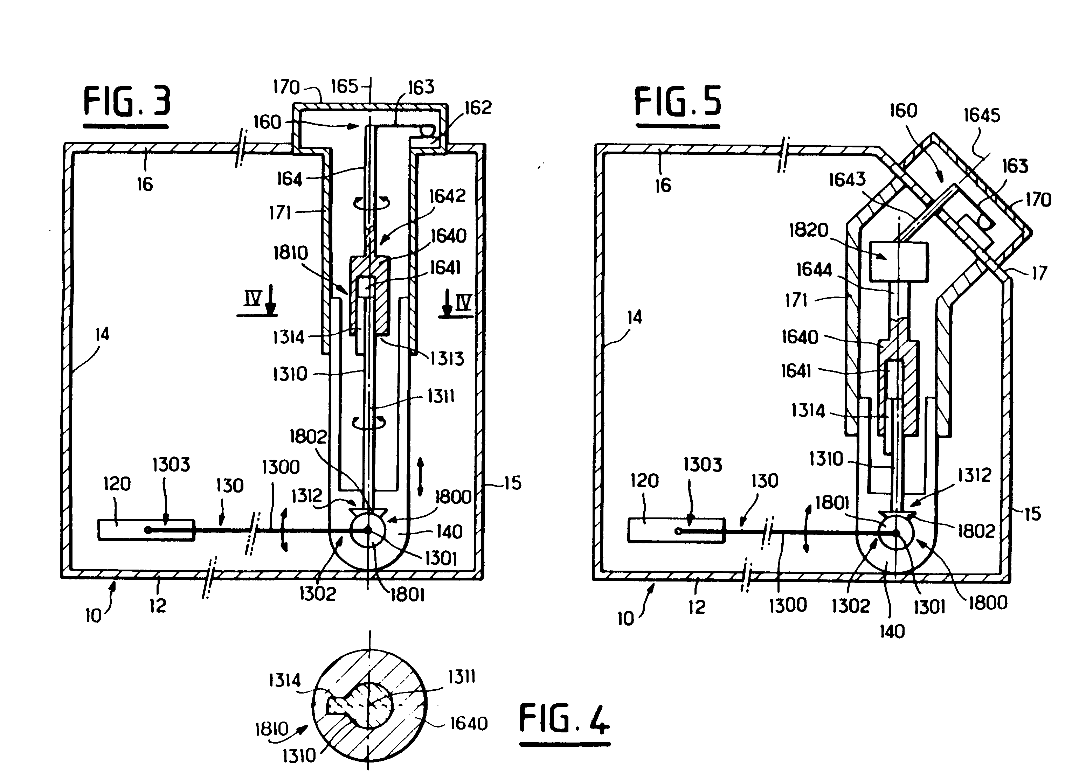

On va maintenant décrire la variante de réalisation représentée sur la figure 3.

On retrouve sur cette figure un réservoir 10. Plus précisément on aperçoit sur la figure 3 annexée un réservoir 10 comprenant une paroi de base 12, deux parois latérales 14, 15, et une paroi supérieure 16.

A la différence du premier mode de réalisation représenté sur les figures 1 et 2, le boîtier 170 qui loge le transducteur électrique, n'est plus fixé sur une paroi latérale 14 ou 15, mais sur la paroi supérieure 16.

Par ailleurs, le levier 130 support de flotteur est scindé en deux tronçons 1300, 1310. Le premier tronçon 1300 est porté à pivotement sur un élément support 140 indexé sur la paroi de fond 12. Plus précisément, l'élément support 140 est guidé à translation verticale par un puits 171 lié à l'embase 170. Ainsi l'élément support 140 repose sur le fond 12.

L'élément support 140 peut reposer sur le fond 12 du réservoir par simple gravité, ou encore être sollicité en appui contre le fond 12 du réservoir par un ressort intercalé entre le puits 171 et l'élément support 140.

Le puits 171 et l'élément support 140 peuvent faire l'objet de nombreuses variantes de réalisation. Pour cette raison, ces éléments ne seront pas décrits plus en détail par la suite.

Le premier tronçon 1300 du levier 130 est monté à pivotement sur l'élément support 140, autour d'un axe 1301, par une première de ses extrémités référencée 1302. L'axe 1301 est avantageusement horizontal.

Par ailleurs de préférence, le premier tronçon 1300 du levier 130 est rectiligne et orthogonal à l'axe 1301.

Ce premier tronçon 1300 porte le flotteur 120 au niveau de sa seconde extrémité 1303.

Là encore, le flotteur 120 peut faire l'objet de nombreuses variantes de réalisation. Le flotteur 120 doit être excentré par rapport à l'axe 1301.

Le second tronçon 1310 du levier 130 s'étend dans une direction générale verticale. Son axe est référencé 1311 sur la figure 3. Ce second tronçon 1310 est guidé à rotation autour de son axe longitudinal vertical 1311, par l'élément support 140.

Par ailleurs, le second tronçon 1310 est lié à rotation avec le premier tronçon 1300 par un système à renvoi d'angle 1800.

Ce système à renvoi d'angle 1800 peut faire l'objet de nombreuses variantes de réalisation.

Il peut s'agir d'un système similaire aux moyens 180 précédemment décrits en regard de la figure 1.

Toutefois, selon le mode de réalisation particulier représente sur la figure 3, le système à renvoi d'angle 1800 est formé de deux pignons coniques 1801, 1802, en prise en permanence. Le pignon conique 1801 est solidaire de la première extrémité 1302 du premier tronçon 1300. Il est centré sur l'axe horizontal 1301. Le second pignon conique 1802 est solidaire de l'extrémité inférieure 1312 du second tronçon 1310. Le pignon 1802 est centré sur l'axe longitudinal vertical 1311 de ce second tronçon 1310.

On retrouve par ailleurs sur la figure 3, un arbre 164 guidé à rotation dans le boîtier 170 autour d'un axe vertical 165 orthogonal à la paroi supérieure 16. Cet arbre 164 porte un curseur 163 qui repose sur une piste résistive 162. La piste résistive 162 est disposée en couronne centrée sur l'axe vertical 165.

De façon comparable aux dispositions précédemment décrites en regard de la figure 1, l'arbre 164 est lié au second tronçon 1310 du levier 130 par des moyens 1810 assurant une liaison à rotation entre le tronçon 1310 du levier 130 et l'arbre porte curseur 164. Ces moyens 1810 peuvent faire l'objet de nombreux modes de réalisation comme décrits précédemment pour les moyens 180.

Ces moyens 1810 peuvent par exemple être formés d'un système à cardan, similaire à celui représenté sur la figure 1 sous la référence 180.

Toutefois, l'arbre 164 étant constamment coaxial au second tronçon 1310 du levier 130, il n'est plus nécessaire d'autoriser un débattement angulaire entre cet arbre 164 et le tronçon 1310 du levier 130. Dans ce cas, la liaison à rotation entre l'arbre 164 et le tronçon 1310 du levier 130, avec liberté de translation relative, peut être définie par simple engagement de structures complémentaires non symétriques de révolution autour des axes 165 et 1311.

De tels moyens d'engagement complémentaires et non symétriques de révolution peuvent bien entendu faire l'objet de nombreuses variantes.

Selon un mode de réalisation avantageux représenté sur la figure 4, l'extrémité supérieure 1313 du second tronçon 1310 peut être munie d'une clavette 1314 engagée dans un logement complémentaire 1641 formé dans un manchon 1640 solidaire de l'extrémité inférieure 1642 de l'arbre 164.

Bien entendu, la disposition inverse peut être retenue.

Le fonctionnement du dispositif représenté sur la figure 3 reste identique à celui précédemment décrit des figures 1 et 2.

Lorsque le niveau de carburant varie dans le réservoir 10, le flotteur 120 suit les évolutions du niveau. Le premier tronçon 1300 du levier 130 pivote par conséquent autour de l'axe horizontal 1301. Ce mouvement de rotation est transmis au second tronçon 1310 du levier par l'engagement des pignons coniques 1801 et 1802. Le mouvement de rotation du second tronçon 1310 du levier est transmis à son tour à l'arbre 164 et par conséquent au curseur 163 par les moyens 1810. Le transducteur formé par la piste résistive 162 et le curseur 163 fournit donc une information directement représentative du niveau de carburant dans le réservoir.

En cas de déformation du fond 12 du réservoir, l'élément support 140 suit celui-ci. Toutefois, un déplacement à translation de l'élément 140 et par conséquent du levier 130 formé des deux tronçons 1300, 1310, et du flotteur 120, selon l'axe vertical 1311, est sans effet sur la position de l'arbre 164, et du curseur 163, donc de l'information délivrée par le transducteur électrique.

Le mode de réalisation représenté sur la figure 3 peut bien entendu faire l'objet de diverses variantes de réalisation.

Selon une première variante, l'axe 165 de l'arbre 164 et l'axe 1311 du second tronçon 1310 de levier, tout en restant coaxiaux, peuvent être non pas verticaux mais au moins légèrement inclinés sur la verticale. Selon encore une autre variante de réalisation, on peut prévoir de disposer l'axe 165 de l'arbre 164 incliné sur la verticale, tout en maintenant l'axe 1311 du second tronçon 1310 de levier parfaitement vertical. Dans ce cas, pour transmettre le mouvement de rotation du second tronçon 1310 à l'arbre 164, il est nécessaire de prévoir des moyens d'entraînement autorisant une inclinaison entre ces éléments et une translation relative entre eux. Pour cela, les moyens 1810 représentés sur les figures 3 et 4 peuvent être remplacés par l'un quelconque des moyens décrits précédemment en regard de la figure 1, tels que par exemple un système à cardan.

Dans ce cas, le boîtier 170 logeant le transducteur peut être fixé sur une paroi latérale inclinée sur la verticale, et non pas sur la paroi supérieure 16 comme illustrée sur la figure 3.

Selon encore une autre variante représentée sur la figure 5, l'arbre 164 peut être scindé en deux tronçons 1643, 1644 inclinés entre eux. Le tronçon supérieur 1643 porte le curseur 163. Il est guidé à rotation autour de son axe 1645 par le boîtier 170. Cet axe 1645 est de préférence orthogonal à la paroi latérale 17 qui porte le boîtier 170. Le tronçon inférieur 1644 de l'arbre 164, de préférence vertical, est muni des moyens 1640, 1641 assurant une liaison à rotation avec le second tronçon 1310 du levier tout en autorisant une translation relative entre ceux-ci. Bien entendu, dans ce cas, il est nécessaire de prévoir des moyens de liaison additionnels 1820 entre les deux tronçons 1643 et 1644 inclinés entre eux. Ces moyens de liaison additionnels 1820 doivent être conçus pour assurer une liaison à rotation entre les deux tronçons 1643, 1644. Ces moyens de liaison 1820 peuvent faire l'objet de nombreuses variantes de réalisation. Il peut s'agir de l'un quelconque des moyens décrits en regard de la figure 1, tels que par exemple une liaison à cardan.

Selon encore une autre variante, le second tronçon 1644 de l'arbre 164 et le second tronçon 1310 du levier 130 peuvent être réunis en un seul et unique élément. Dans ce cas, les moyens de liaison 1810 sont supprimés et les moyens 1820 assurent directement la liaison à rotation entre le tronçon 1643 de l'arbre 164 et le tronçon 1310 du levier 130.

## Revendications

1. Dispositif de mesure de niveau de carburant dans un réservoir de véhicule automobile, comprenant :
- un flotteur (120) apte à suivre le niveau de carburant,
- une embase (110) fixée à une paroi (14) du réservoir (10),
- un boîtier (170) fixé à l'embase (110),
- un transducteur électrique (162, 163) placé dans le boîtier (170) et comprenant une piste résistive (162) et un curseur (163) coopérant avec la piste résistive (162),
- un arbre (164) qui traverse une paroi du boîtier (170), qui est monté à rotation par rapport à celui-ci et dont l'extrémité interne au boîtier (170) est relié au curseur (163),
- un levier (130) articulé sur un support (140), et qui porte le flotteur( 120), et
- des moyens (180) assurant une liaison entre le levier (130) et l'arbre (164) de sorte que le levier (130) pilote le transducteur électrique (162, 163) et ce dernier (162,163) fournisse un signal représentatif du niveau de carburant dans le réservoir,
caractérisé par le fait que :
- le support (140) est articulé autour d'un axe horizontal (142) sur l'embase (110) par une première de ses extrémités (138), la seconde extrémité (143) du support étant sollicitée en permanence contre la paroi inférieure (12) du réservoir pour suivre les déplacements de celle-ci,
- le levier (130) possède un brin principal (131), rectiligne et généralement parallèle au support (140), guidé à rotation autour de son axe longitudinal (132), sur le support (140), et un brin auxiliaire (135) de levier, lequel brin auxiliaire (135) n'est pas coaxial du brin principal (131),
- les moyens de liaison (180) étant formés de moyens d'entraînement à cardan reliant l'arbre (164) et l'extrémité supérieure du levier (130),
- le brin auxiliaire (135) du levier est raccordé sur l'extrémité inférieure du brin principal (131) et porte le flotteur (120), de sorte que les déplacements du flotteur (120) entraînent le pivotement du levier (130) autour de son axe longitudinal (132),

2. Dispositif selon la revendication 1, caractérisé par le fait que l'embase (110) est fixée sur une paroi latérale (14) du résevoir.

3. Dispositif selon l'une des revendications 1 ou 2, caractérisé par le fait que l'extrémité inférieure de l'élément support (140) est sollicitée contre le fond (12) du réservoir par simple gravité.

4. Dispositif selon l'une des revendications 1 ou 2, caractérisé par le fait que l'extrémité inférieure de l'élément support (140) est sollicitée contre le fond (12) du réservoir, par un élément ressort.

5. Dispositif selon l'une des revendications 1 à 4, caractérisé par le fait que ledit brin auxiliaire du levier (130) est constitué d'un double coude formé d'un brin intermédiaire (134) lié à l'extrémité inférieure du brin principal (131) et un brin extrême porte flotteur (135).

6. Dispositif selon l'une des revendications 1 à 5, caractérisé par le fait qu'il comprend un joint d'étanchéité (174) au niveau du passage de l'arbre (164) à travers le boîtier (170).

7. Dispositif selon la revendication 6, caractérisé par le fait que le joint d'étanchéité (174) est un joint annulaire.

8. Dispositif selon l'une des revendications 1 ou 7, caractérisé par le fait qu'il comprend deux joints d'étanchéité (174, 176) définissant entre eux une chambre intermédiaire (178) au niveau du passage de l'arbre (164) à travers le boîtier (170).

9. Dispositif selon la revendication 8, caractérisé par le fait que la chambre intermédiaire (178) communique avec l'atmosphère.

10. Dispositif selon l'une des revendications 1 à 9, caractérisé par le fait que les moyens d'entraînement à cardan (180) comprennent une double fourche liée à l'un de l'arbre (164) ou du levier (130) et un doigt d'entraînement (184) reçu entre ces fourches et lié à l'autre du levier (130) ou de l'arbre (164).

11. Dispositif selon l'une des revendications 1 à 10, caractérisé par le fait que l'axe longitudinal (132) du levier (130) passe par l'axe horizontal (142) de pivotement du support (140).

## Patentansprüche

1. Vorrichtung zum Messen der Höhe des Brennstoffs im Tank eines Kraftfahrzeugs mit
- einem Schwimmer (120), der der Höhe des Brennstoffs folgen kann,
- einer Fußplatte (110), die an einer Wand (14) des Tanks (10) befestigt ist,
- einem Gehäuse (170), das an der Fußplatte (110) befestigt ist,
- einem elektrischen Wandler (162, 163), der im Gehäuse (170) angeordnet ist und eine Widerstandsbahn (162) sowie einen Gleitkontakt (163) umfaßt, der mit der Widerstandsbahn (162) zusammenarbeitet,
- einer Welle (164), die durch eine Wand des Gehäuses (170) hindurchgeht, diesbezüglich drehbar angebracht ist und deren Ende im Inneren des Gehäuses (170) mit dem Gleitkontakt (163) verbunden ist,
- einem Hebel (130), der ausschwenkbar an einem Halter (140) angebracht ist und den Schwimmer (120) trägt, und
- Einrichtungen (180), die eine Verbindung zwischen dem Hebel (130) und der Welle (164) derart herstellen, daß der Hebel (130) den elektrischen Wandler (162, 163) steuert, und letzterer (162, 163) ein Signal liefert, das die Höhe des Brennstoffs im Tank wiedergibt, dadurch gekennzeichnet, daß
- der Halter (140) mit einem ersten (138) seiner Enden um eine horizontale Achse (142) schwenkbar an der Fußplatte (110) angebracht ist, wobei das zweite Ende (143) des Halters dauerhaft gegen die untere Wand (12) des Tanks so vorgespannt ist, daß es deren Versetzungen folgt,
- der Hebel (130) einen Hauptstrang (131), der geradlinig und im wesentlichen parallel zum Halter (140) ist und um seine Längsachse (132) am Halter (140) drehbar geführt ist, und einen Hilfsstrang (135) des Hebels aufweist, welcher Hilfsstrang (135) zum Hauptstrang (131) nicht koaxial ist,
- die Einrichtungen (180) zum Verbinden von Kardanmitnahmeeinrichtungen gebildet sind, die die Welle (164) und das obere Ende des Hebels (130) verbinden und
- der Hilfsstrang (135) des Hebels mit dem unteren Ende des Hauptstranges (131) verbunden ist und den Schwimmer (120) trägt, derart, daß Versetzungen des Schwimmers (120) den Hebel (130) in einer Schwenkbewegung um seine Längsachse (132) mitnehmen.

2. Vorrichtung nach Anspruch 1, dadurch gekennzeichnet, daß die Fußplatte (110) an einer Seitenwand (14) des Tanks befestigt ist.

3. Vorrichtung nach einem der Ansprüche 1 oder 2, dadurch gekennzeichnet, daß das untere Ende des Halteelementes (140) gegen den Boden (12) des Tanks nur durch das Eigengewicht vorgespannt ist.

4. Vorrichtung nach einem der Ansprüche 1 oder 2, dadurch gekennzeichnet, daß das untere Ende des Halteelements (140) gegen den Boden (12) des Tanks über ein Federelement vorgespannt ist.

5. Vorrichtung nach einem der Ansprüche 1 bis 4, dadurch gekennzeichnet, daß der Hilfsstrang des Hebels (130) aus einem Winkelstück besteht, das von einem Zwischenstrang (134), der mit dem unteren Ende des Hauptstranges (131) verbunden ist, und einem äußeren Strang (135) gebildet ist, der den Schwimmer trägt.

6. Vorrichtung nach einem der Ansprüche 1 bis 5, dadurch gekennzeichnet, daß sie eine Dichtung (174) auf der Höhe des Durchgangs der Welle (164) durch das Gehäuse (170) aufweist.

7. Vorrichtung nach Anspruch 6, dadurch gekennzeichnet, daß die Dichtung (174) eine Ringdichtung ist.

8. Vorrichtung nach einem der Ansprüche 1 oder 7, dadurch gekennzeichnet, daß sie zwei Dichtungen (174, 176) umfaßt, die dazwischen eine Zwischenkammer (178) auf der Höhe des Durchgangs der Welle (164) durch das Gehäuse (170) begrenzen.

9. Vorrichtung nach Anspruch 8, dadurch gekennzeichnet, daß die Zwischenkammer (178) mit der Außenluft in Verbindung steht.

10. Vorrichtung nach einem der Ansprüche 1 bis 9, dadurch gekennzeichnet, daß die Kardanmitnahmeeinrichtungen (180) eine Doppelgabel, die mit der Welle (164) oder dem Hebel (130) verbunden ist, und einen Mitnahmezapfen (184) umfassen, der zwischen den Gabelzinken aufgenommen ist und mit dem jeweils anderen Bauelement, nämlich dem Hebel (130) oder der Welle (164), verbunden ist.

11. Vorrichtung nach einem der Anspröche 1 bis 10, dadurch gekennzeichnet, daß die Längsachse (132) des Hebels (130) durch die horizontale Schwenkachse (142) des Halters (140) geht.

## Claims

1. Device for measuring the fuel level in a motor vehicle fuel tank, comprising:
- a float (120) capable of following the fuel level,
- a base (110) fixed to a wall (14) of the tank (10),
- a housing (170) fixed to the base (110),
- an electrical transducer (162, 163) placed in the housing (170) and including a resistive track (162) and a slide (163) cooperating with the resistive track (162),
- a shaft (164) which passes through a wall in the housing (170), which is mounted free to rotate with respect to the housing, and the end of the shaft inside the housing (170) is connected to the slide (163),
- a lever (130) hinged on a support (140) which supports the float (120), and
- means (180) forming a connection between the lever (130) and the shaft (164) such that the lever (130) controls the electrical transducer (162, 163), and that the electrical transducer (162, 163) outputs a signal representing the fuel level in the tank,
characterized in that:
- the support (140) is hinged about a horizontal axis (142) on the base (110) by a first one of its ends (138), the second end (143) of the support being continuously urged against the bottom wall (12) of the tank to follow its movements,
- the lever (130) has a main strand (131), straight and generally parallel to the support (140), guided in rotation about its longitudinal axis (132) on support (140), and an auxiliary lever strand (135), said auxiliary strand (135) not being coaxial with the main strand (131),
- connecting means (180) being formed of drive means with a universal joint connecting the shaft (164) and the upper end of the lever (130),
- the auxiliary strand (135) of the lever is connected to the lower end of the main strand (131), and supports the float (120), such that movements of the float (120) cause the lever (130) to pivot about its longitudinal axis (132).

2. Device according to claim 1, characterized in that the base (110) is fixed to a side wall (14) of the tank.

3. Device according to any of claims 1 and 2, characterized in that the lower end of the support member (140) is urged against the bottom (12) of the tank simply by gravity.

4. Device according to any of claims 1 and 2, characterized in that the lower end of the support member (140) urged against the bottom (12) of the tank, by a spring member.

5. Device according to any of claims 1 to 4, characterized in that said auxiliary strand of lever (130) is composed of a double elbow formed of an intermediate strand (134) linked to the lower end of the main strand (131), and an end float support strand (135).

6. Device according to any of claims 1 to 5, characterized in that it comprises a seal (174) where shaft (164) passes through housing (170).

7. Device according to claim 6, characterized in that the seal (174) is an O-ring.

8. Device according to any of claims 1 or 7, characterized in that it comprises two seals (174, 176) defining therebetween an intermediate chamber (178) at the passage of the shaft (164) through housing (170).

9. Device according to claim 8, characterized in that the intermediate chamber (178) communicates with the atmosphere.

10. Device according to any of claims 1 to 9, characterized in that drive means with a universal joint (180) comprise a double fork, connected to one of shaft (164) or lever (130), and a drive pin (184) that fits between these forks and is connected to the other of lever (130) or shaft (164).

11. Device according to any of claims 1 to 10, characterized in that the longitudinal axis (132) of the lever (130) passes through the horizontal axis (142) about which support (140) pivots.
